# EUROPEAN PATENT APPLICATION

(11) **EP 4 297 140 A1**
(43) Date of publication of application: **27.12.2023**
(21) Application number: 22181068.2
(22) Date of filing: 24.06.2022
(51) Int. Cl.: H01M 10/0562, H01M 10/0585, H01M 4/66

(54) **MULTI-CELL MONOLITHIC THIN-FILM BATTERY AND FABRICATION METHOD THEREOF**

(71) Applicant: EMPA Eidgenössische Materialprüfungs- und Forschungsanstalt, 8600 Dübendorf (CH)
(72) Inventor: Futscher, Moritz, 8600 Dübendorf (CH); Brinkman, Luc, 8600 Dübendorf (CH); Abdessalem, Aribia, 8600 Dübendorf (CH); Romanyuk, Yaroslav, 8600 Dübendorf (CH); Müller, André, 8600 Dübendorf (CH)
(74) Representative: Prins Intellectual Property AG

(57) **Abstract**

The disclosed invention consists of a multi-cell monolithic thin-film battery (0), comprising one substrate (1) on which two or more monolithic battery cells (2, 2'), comprising a cathode current collector (20), a cathode electrode layer (21), a solid electrolyte layer (22) and an anode current collector (23), all layers are monolithically deposited onto each other, individual battery cells can be connected in series, in parallel, or a combination of both, showing improved properties and a more reliable production method. This is reached by using thin-film techniques with layer thicknesses between 5 nm and 20 µm, avoiding an anode layer during manufacturing, wherein all layers of the multi-cell monolithic thin-film battery (0) are manufactured on top of each other on a single substrate (1) and the first layer of the next adjacent monolithic anode-free battery cell (2') is deposited on the last layer of the previous monolithic anode-free battery cell (2).

## Description

### TECHNICAL FIELD

The present invention describes a multi-cell monolithic thin-film battery, comprising one substrate on which two or more monolithic battery cells, comprising a cathode current collector, a cathode electrode layer, a solid electrolyte layer and an anode current collector deposited onto each other, and a production method thereof.

### STATE OF THE ART

There are increasing demands for energy storage technologies for efficient utilization of clean and sustainable energy sources. Solid-state lithium ion batteries based on non- or less-flammable solid electrolytes are attracting great attention, owing to their enhanced safety in comparison to conventional Li-ion batteries. As can be read in "All-solid-state lithium-ion and lithium metal batteries - paving the way to large-scale production, Journal of Power Sources, Volume 382, 1 April 2018, Pages 160-175", also Li metal based thin-film multi-cell batteries are known in the prior art.

Li-metal based solid-state cells and batteries are today manufactured using Li metal foil or PVD deposited Li metal. However, the use of Li metal in solid-state batteries is impractical from a manufacturing perspective and may hinder eventual commercialization. In particular, Li foils are difficult to handle as Li metal forms a passivating surface film even in a dry room, and hence require an argon atmosphere to avoid the high interfacial resistance. Anode-free solid-state batteries solve this by removing the anode from the manufacturing process. However, the non-uniform growth of Li metal at the interface between the current collector and solid electrolyte is one of the major challenges in such anode-free batteries, even in single-cell batteries.

To produce multi-cell monolithic thin-film batteries, comprising a multiplicity of battery cells, some efforts have been made. Stable monolithic battery cells could be layer wise deposited on a substrate using an anode electrode layer, a solid electrolyte layer, and a cathode electrode layer, but the monolithic connection of individual cells and stable operation of such multi-cell stacks has proven difficult.

### DESCRIPTION OF THE INVENTION

The object of the present invention is to create mechanically and electronically stable multi-cell monolithic thin-film batteries with improved properties and a simplified but more reliable production method.

It is the objective of the present invention to provide multi-cell monolithic thin-film batteries with a custom form factor, improved discharge capacities, ultrashort charging/discharging times, deep discharge capacities, improved thermal management, e.g. no need for cooling, longer cycle life, improved stability that are suitable for high voltage devices, and more economic and simplified manufacturing.

The inventive device production method and later configuration improves upon the prior state of the art by providing an anode-free multi-cell monolithic thin-film battery design that results in improved discharge capacities, high voltage devices, and a simplified manufacturing process due to an absence of the negative electrode layer/anode layer in the as-manufactured cells.

Our as-manufactured cells respectively their production method is interesting for battery manufacturers specialized with Gen4 and Gen5 batteries which are using thin-film manufacturing techniques. Potential applications for these batteries include high-end and mobile applications such as drones, robots, eVTOLs, aerospace, urban mobility, medical devices, and wearables.

### BRIEF DESCRIPTION OF THE DRAWINGS

Further understanding of various aspects of the invention can be obtained by reference to the following detailed description in conjunction with the associated drawings, which are described briefly below.

It should be noted that in the differently described embodiments, the same parts are provided with the same reference symbols or the same component names, the disclosures contained in the entire description being able to be applied analogously to the same parts with the same reference symbols or the same component symbols.

A preferred exemplary embodiment of the subject matter of the invention is described below in conjunction with the attached drawings.
- Figure 1a: shows a schematic view of a multi-cell monolithic thin-film battery with at least two monolithic deposited anode-free battery cells, while
- Figure 1b: shows the multi-cell monolithic thin-film battery comprising a blocking layer between first and second monolithic anode-free battery cell, while
- Figure 1c: shows another two-cell monolithic thin-film battery with a seed layer between solid electrolyte layer and anode current collector of each cell and
- Figure 1d: shows the battery according Figure 1c, with a blocking layer between first and second monolithic anode-free thin-film battery cell, all cells of such batteries connected in series.
- Figure 2a: shows a SEM cross section of a two-cell monolithic thin-film battery with two monolithic cells on one substrate.
- Figure 2b: shows a charge-discharge curve of the two-cell monolithic thin-film battery according to Figure 2a.
- Figure 3: shows a multiplicity of n cells connected in parallel.
- Figure 4: shows a SEM cross section of a two-cell monolithic thin-film battery with optional seed layer between solid electrolyte layer and anode current collector of each cell.

### DESCRIPTION

The present invention describes a multi-cell monolithic thin-film battery 0, comprising at least two monolithic deposited anode-free battery cells 2, 2', with single layers deposited on one substrate 1. In a monolithic deposited battery, all layers of the battery are manufactured on top of each other on a single substrate 1.

Based on one substrate 1 layer, n≥2 monolithic anode-free battery cells 2, 2', comprising at least cathode current collector 20, a cathode electrode layer 21, a solid electrolyte layer 22 and an anode current collector 23, avoiding an anode layer, are deposited. All layers are deposited using thin-film techniques within known thickness regimes of thin-film technologies between 5 nm and 20 µm.

An anode-free multi-cell monolithic thin-film battery 0 is one in which no anode is present during manufacturing. As the multi-cell monolithic thin-film battery 0 charges, Li ions are plated at the interface between the anode current collector 23 and the solid electrolyte layer 22, forming a Li-metal anode. In the case of an anode-free multi-cell monolithic thin-film battery 0, an anode is absent during manufacturing.

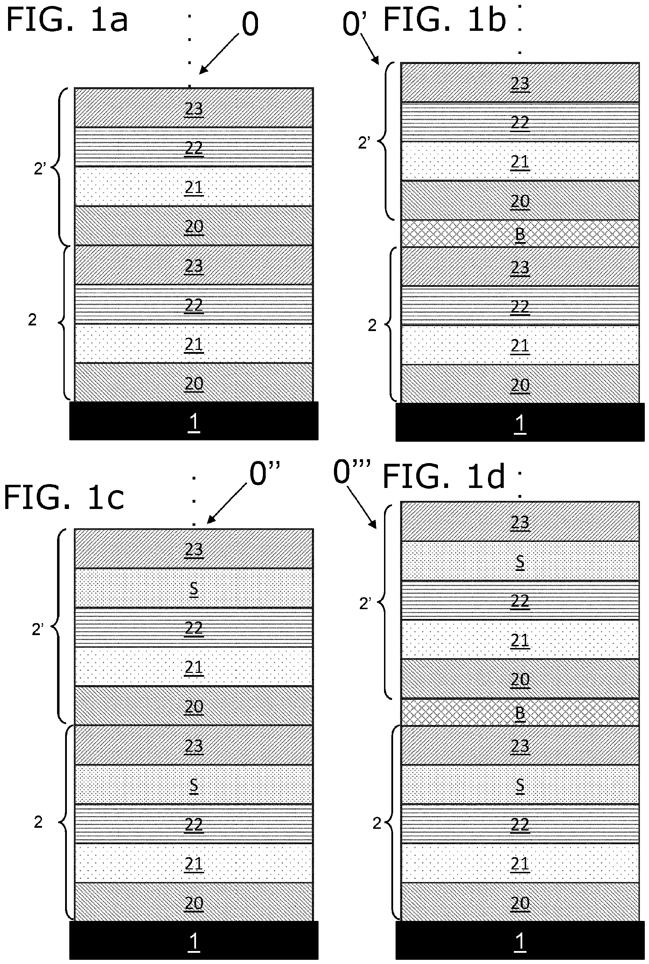

The sequence of deposition of layers 20 to 23 and the interface between anode current collector 23 layer of one monolithic anode-free battery cell 2 and neighbouring following monolithic anode-free battery cell 2' is depicted in the schematics view of Figure 1a for the case where individual cells are electrically connected in series.

In another embodiment of the multi-cell monolithic thin-film battery 0' with at least two neighbouring monolithic anode-free battery cells 2, 2' according Figure 1b, an optional blocking layer B is deposited between the cathode current collector (20) and the anode current collector (23) of adjacent monolithic anode-free battery cells (2, 2').

The blocking layer B can modify electronic resistance, ionic resistance, or both, improve mechanical properties and may be removed at specific locations or deposited only at specific locations to allow tailored direct electronic and/or ionic contact between the battery cells 2, 2'.

The blocking layer B can be deposited between each individual adjacent monolithic anode-free battery cell or repeated only between multiple monolithically deposited battery cells.

The blocking layer B as interlayer between cells 2, 2' comprises one or more transition metal oxides. The thickness of the blocking layer B is between 5 nm and 1 µm, comprising transition metal oxides.

The idea of the blocking layer is to introduce an interlayer that modifies electronic and/or ionic resistance between the individual multi-cell monolithic anode-free battery cell 2, 2'. This layer can be selectively deposited using shadow masks, or be selectively removed by plasma etching to precisely define the contact area between individual monolithic anode-free battery cells 2, 2', similar to optical lithography. This concept was never applied to multi-cell monolithic anode-free battery cells before. This simplifies the fabrication of multi-cell monolithic anode-free batteries that otherwise require the use of complicated fabrication processes.

Most preferred is a blocking layer B deposited by PVD or ALD, atomic layer deposition as a type of chemical vapour deposition (CVD) that increases the electronic and/or ionic resistance between the individual battery cells 2, 2', can act as a planarization layer to eliminate potential inhomogeneities and compensates for possible mechanical stresses that may occur during cycling.

In addition to adding the blocking layer B as an interlayer between individual monolithic anode-free battery cells 2, 2', the blocking layer can be introduced as an interlayer between any adjacent layers of an individual monolithic anode-free battery cell, to modify electronic and/or ionic resistance.

Also improved results with multi-cell monolithic thin-film batteries 0", comprising precisely defined layers and avoiding an anode layer, could be seen by introducing an optional seed layer S in each monolithic anode-free battery cell 2, 2', between solid electrolyte layer 22 and anode current collector 23. This optional seed layer S is deposited with one of the same thin-film deposition technique as the other layers. The seed layer S increases the number of nucleation sites for Li-metal plating at the interface between the anode current collector 23 and the solid electrolyte layer 22 for homogeneous Li-metal plating and stripping.

The optional seed layer S is deposited with thicknesses between 1 and 500 nm between solid electrolyte layer 22 and anode current collector 23, most preferred may have a thickness below 100 nm.

The seed layer S comprises one or more of the following elements or compounds comprising these selected from the group consisting of Mg, Ca, Sr, Ru, Rh, Ir, Pd, Pt, Ag, Au, Zn, Cd, Al, Ga, In, Ti, C, Si, Ge, Sn, Pb, P, As, Sb, Bi, S, Se, Te, or compounds consisting of previous elements with the addition of one or more of the following elements or compounds consisting of H, B, N, O, F, Cl, Br, I.

Most preferred the seed layer S comprises one or more atoms selected from the group consisting of Au, Ag, Zn, Mg, Pt, Al and C most preferred comprising Au, Ag and/or C.

In addition to increasing the number of nucleation sites via a seed layer between the solid electrolyte layer 22 and anode current collector 23, the number of nucleation sites for Li-metal plating in anode-free battery cells can be increased by short pulses of high current densities, either during precycling or by short current pulses with increased current densities during battery or cell charging and/or discharging.

Last but not least a combination of embodiments of Figure 1b and 1c, was carried out, which also showed good and stable results. Between the monolithic anode-free battery cells 2, 2' with seed layer S between solid electrolyte layer 22 and anode current collector 23 of each cell 2, 2', a blocking layer B is deposited.

The Li metal in thin-film batteries or cells is normally deposited by PVD processes. Since the Li metal deposited by PVD processes is generally inhomogeneous, this prevents the stacking of several thin-film batteries or cells on top of each other. By avoiding the Li-metal anode, the single monolithic anode-free battery cells 2, 2' can be stacked in reproducible, mechanical and electronically stable way.

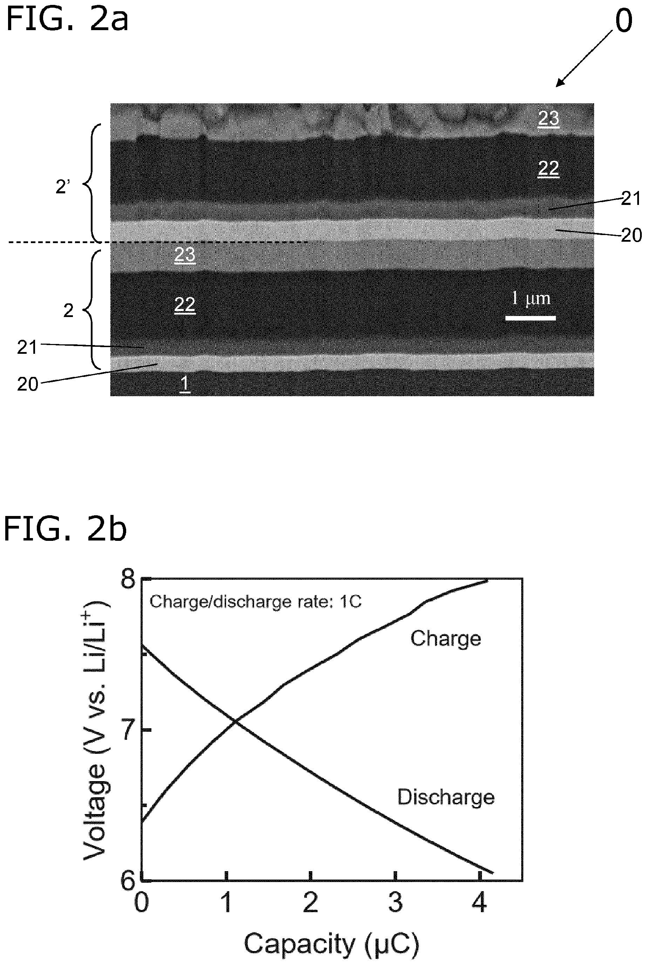

In Figure 2a a SEM image of the embodiment of multi-cell monolithic anode-free thin-film battery 0 according to schematics of Figure 1a is presented, while the electronic results of such device in form of a charge/discharge curve are presented in Figure 2b, which is a first proof.

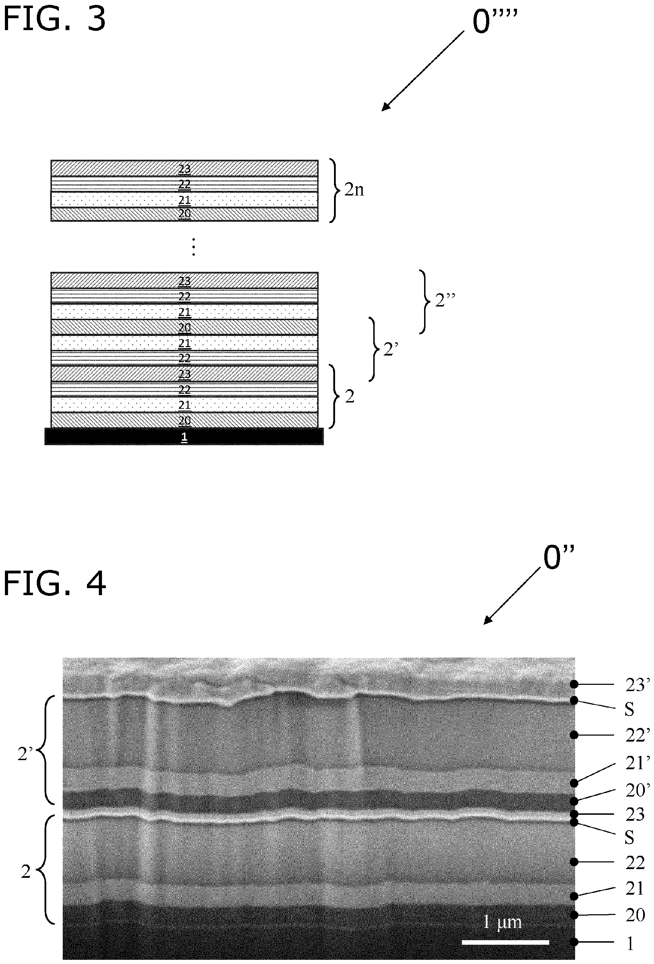

As shown in Figure 3 it is also possible to carry out the deposition steps of individual monolithic thin-film battery cells 2 to 2' to connect the layers in parallel, where adjacent battery cells share the cathode current collector 20 or the anode current collector 23. The individual anode current collectors 23 and cathode current collectors 20 are connected, e.g. via tabs, to electrically connect the individual battery cells in parallel. The seed layer S and the blocking layer B are not shown here, but will be deposited as described above. The seed layer S between neighbouring solid electrolyte layer 22 and anode current collector 23 and the blocking layer B can be introduced as an interlayer between any adjacent layers of an individual monolithic anode-free battery cell, specifically between the individual multi-cell monolithic anode-free battery cell 2, 2'.

In SEM cross section of a two-cell 2, 2' battery 0", the seed layer S is placed between solid electrolyte layer 22 and anode current collector 23 of each cell 2, 2'.

The later multi-cell monolithic thin-film battery 0 can also be made by a combination of series and parallel connection of the layers of each cell 2.

Used substrates 1 can be rigid or flexible and consists of metals, polymers or glassy materials, most preferred glass materials like glass/TiN or Si/TiN.

The cathode current collector 20 comprises one or more of the following selected from the group consisting of Al, Au, stainless steel, or superalloys. Most preferred material for the cathode current collector 20 is aluminium, most preferred with thicknesses between 50 nm and 1 µm. Evaporation of Al pellets with a rate of 1 nm/min to 10 nm/min at RT.

The cathode electrode layer 21 comprises one or more of the following selected from the group consisting of
LCO (Lithium Cobalt Oxide),
NMC (Nickel Manganese Cobalt-Oxide),
NCA (Lithium Nickel Cobalt Aluminium Oxide),
NMA (Nickel Manganese Aluminum),
LFP (Lithium Iron Phosphate),
LMO (Lithium Manganese Dioxide),
LMNO (Lithium Manganese Nickel Oxide),
VO (Vanadium Oxide),
chalcogens, chalcogenides, halogens, and metal halides.

The cathode electrode layer 21 is deposited as thin-film with thicknesses between 100 nm to 20 µm or in the form of particles with sizes between 0.01 and 2 µm embedded in a composite matrix to improve ionic and/or electronic conductivities and mechanical properties to compensate for mechanical deformation due to swelling and shrinkage during cycling.

Most preferred material for the cathode electrode layer 21 is LCO or NMC, most preferred with a thickness between 100 nm and 5 µm. RF sputtering of LiCoOz, power: 5-15 W/cm², gas flow: Ar 24-60 sccm, Oz 0.5-1 sscm, pressure: 3 mTorr, rate: 3-10 nm/min at RT.

The solid electrolyte layer 22 comprises one or more of the following selected from the group consisting of nitrites, oxides, sulfides, halides, phosphates, borates, hydrides, and polymers. Such solid electrolyte layer 22 is deposited as thin film with thicknesses between 0.1 µm and 5 µm.

Most preferred material for solid electrolyte layer 22 is LiPON, lithium phosphorus oxynitride, an amorphous glassy material, known as electrolyte material, with a thickness between 300 nm and 2 µm, most preferred about 1000 nm +/- 10%. RF co-sputtering of Li₂O and Li₃PO₄ targets, power: 5-10 W/cm² (Li₃PO₄), 5-10 W/cm² (LizO), gas flow: 25-50 sccm (N₂), pressure: 3 mTorr with a rate: 1-2.5 nm/min at room temperature is applied.

Each anode current collector 23 comprises one or more of the following selected from the group consisting of Cu, Ni, Ti, stainless steel, and superalloys. Most preferred thickness of the anode current collector 23 is between 50 nm and 1 µm. If Cu is used the thickness should be about 100 nm +/-10%.

The individual layers are successively applied to the substrate 1 in order as described. All individual layers will be deposited by PVD, CVD, dip-coating, spin-coating or screen printing so by means of thin film techniques.

Optionally a crystallization after layer deposition of the individual layers can be performed in argon, nitrogen, oxygen atmosphere or in vacuum at material temperatures between 40 °C and 1000 °C, after the deposition of the cathode electrode layer 21, the solid electrolyte layer 22, the seed layer S, the blocking layer B, the deposition of one monolithic thin-film battery, or the deposition of two or more multi-cell monolithic thin-film batteries.

As disclosed and shown in the figures the multi-cell monolithic thin-film batteries 0, 0', 0", 0‴ comprising one substrate 1 on which two and more monolithic battery cells 2, 2', 2", comprising in the following order a cathode current collector 20, a cathode electrode layer 21, a solid electrolyte layer 22 and an anode current collector 23 are deposited. Also a reverse order of the different layers is possible, which is not shown here in detail.

### LIST OF REFERENCE NUMERALS

0 multi-cell monolithic thin-film battery
(with more than one cell, connected in series, in parallel, or a combination of both)
1 substrate (one per multi-cell monolithic thin-film battery)
2, 2', 2" monolithic anode-free battery cell
   20 cathode current collector
   21 cathode electrode layer
   22 solid electrolyte layer
   S optional seed layer (list)
   23 anode current collector
   B optional blocking layer (interlayer)

## Claims

1. Multi-cell monolithic thin-film battery (0), comprising one substrate (1) on which two and more monolithic battery cells, comprising a cathode current collector (20), a cathode electrode layer (21), a solid electrolyte layer (22) and an anode current collector (23) deposited onto each other,
**characterized in that**
all monolithic battery cells (2, 2') are produced by thin-film techniques with layer thicknesses between 10 nm and 20 µm, avoiding an anode layer during manufacturing, therefore named monolithic anode-free battery cells (2, 2'), wherein all layers of the resulting multi-cell monolithic thin-film battery (0) are manufactured on top of each other on a single substrate (1) and the first layer of the next adjacent monolithic anode-free battery cell (2') is deposited on the last layer of the previous monolithic anode-free battery cell (2).

2. Multi-cell monolithic thin-film battery (0') according to claim 1, wherein a blocking layer (B) is deposited between any adjacent layers of an individual monolithic anode-free battery cell.

3. Multi-cell monolithic thin-film battery (0') according to claim 1, wherein a blocking layer (B) is deposited between the cathode current collector (20) and the anode current collector (23) of adjacent monolithic anode-free battery cells (2, 2').

4. Multi-cell monolithic thin-film battery (0') according to claim 2 or 3, wherein the blocking layer (B) as interlayer comprises metal oxides.

5. Multi-cell monolithic thin-film battery (0') according to one of the claims 2 to 4, wherein the deposited thickness of the blocking layer (B) is between 5 nm and 1 µm.

6. Multi-cell monolithic thin-film battery (0", 0‴) according to one of the preceding claims, wherein a seed layer (S) is deposited between the solid electrolyte layer (22) and the anode current collector (23) of each monolithic anode-free battery cell (2).

7. Multi-cell monolithic thin-film battery (0') according to claim 6, wherein the deposited thickness of the seed layer (S) is between 1 nm and 500 nm, most preferred between 10 nm and 100 nm.

8. Multi-cell monolithic thin-film battery (0') according to one of the claims 6 or 7, wherein the material of the seed layer (S) comprises atoms selected from the group consisting of Au, Ag, Zn, Mg, Pt, Al, and C most preferred the seed layer (S) comprises Au, Ag, and/or C.

9. Multi-cell monolithic thin-film battery (0) according to one of the preceding claims, wherein the material of the solid electrolyte layer (22) comprises one or more of the following selected from the group consisting of phosphates, borates, oxides, sulfides, halides, hydrides, and polymers, deposited as thin films with thicknesses between 0.1 µm and 5 µm.

10. Multi-cell monolithic thin-film battery (0') according to claim 9, wherein the material of the solid electrolyte layer (22) is Lipon.

11. Multi-cell monolithic thin-film battery (0) according to one of the preceding claims, wherein anode current collector (23) comprises one or more of the following selected from the group consisting of Cu, Ni, Ti, stainless steel, and superalloys with a thickness between 50 nm and 1 µm.

12. Multi-cell monolithic thin-film battery (0) according to one of the preceding claims, wherein the cathode current collector (20) comprises Al and has a thickness between 50 nm and 1 µm.

13. Production method of a multi-cell monolithic thin-film battery (0), comprising at least two monolithic anode-free battery cells (2, 2') on one substrate (1), **wherein**
monolithic anode-free battery cells (2) are deposited layer wise on the substrate (1) in subsequent thin-film deposition steps by PVD, CVD, ALD, dip-coating, spin-coating, or screen printing, with thicknesses between 5 nm and 20 µm, each battery cell consisting of a cathode current collector (20), cathode electrode layer (21), solid electrolyte layer (22), and anode current collector (23), avoiding a manufactured anode layer and at least one following monolithic anode-free battery cell (2') on top in the same layers.

14. Production method according to claim 13, wherein between the solid electrolyte layer (22) and the adjacent anode current collector (23) of each monolithic anode-free battery cell (2, 2') a seed layer (S) is deposited with thin-film technique by PVD, CVD, ALD, dip-coating, spin-coating, or screen printing.

15. Production method according to one of the claims 13 or 14, wherein between two adjacent layers of an individual monolithic anode-free battery cell (2, 2', 2") a blocking layer (B) is deposited with thin-film technique by PVD, CVD, ALD, dip-coating, spin-coating, or screen printing.

16. Production method according to one of the claims 13 to 15, wherein between two adjacent monolithic anode-free battery cells (2, 2') a blocking layer (B) is deposited with thin-film technique by PVD, CVD, ALD, dip-coating, spin-coating or screen printing, between the cathode current collector (20) and the anode current collector (23) of adjacent monolithic anode-free battery cells (2, 2').

17. Production method according to claim 15 or 16, wherein the blocking layer (B) is deposited selectively using shadow masks or selectively removed by plasma etching to precisely define the contact area between two adjacent monolithic anode-free battery cells (2, 2').
